# EUROPEAN PATENT SPECIFICATION

(11) **EP 3 272 052 B1**
(45) Date of publication and mention of the grant of the patent: **06.03.2019**
(21) Application number: 15727319.4
(22) Date of filing: 13.05.2015
(51) Int. Cl.: H04L 5/00, H04W 4/08

(54) **NETWORK NODE, USER DEVICE AND METHODS THEREOF BASED ON SUPERPOSITION TRANSMISSION**
NETZWERKKNOTEN, TEILNEHMERVORRICHTUNG UND DAZUGEHÖRIGE VERFAHREN BASIEREND AUF SIGNALÜBERLAGUNGSTECHNIKEN
NOEUD DE RÉSEAU, DISPOSITIF UTILISATEUR ET PROCÉDÉS ASSOCIÉS BASÉS SUR LA SUPERPOSITION DE TRANSMISSIONS DE SIGNAUX

(43) Date of publication of application: 24.01.2018
(73) Proprietor: Huawei Technologies Co., Ltd., Longgang District Shenzhen, Guangdong 518129 (CN)
(72) Inventor: SOLDATI, Pablo, S-164 40 Kista (SE); PEROTTI, Alberto Giuseppe, S-164 40 Kista (SE)
(74) Representative: Kreuz, Georg Maria
(86) International application number: PCT/EP2015/060617
(87) International publication number: WO 2016/180491

(56) References cited:
- NTT DOCOMO: "Evaluation methodologies for downlink multiuser superposition transmissions", 3GPP DRAFT; R1-152063 , vol. RAN WG1, no. Belgrade, Serbia; 20150420 - 20150424 11 April 2015 (2015-04-11), XP050950324, Retrieved from the Internet: URL:http://www.3gpp.org/ftp/tsg_ran/WG1_RL 1/TSGR1_80b/Docs/ [retrieved on 2015-04-11]
- INSTITUTE FOR INFORMATION INDUSTRY (III): "Discussion on downlink control channel for multiuser superposition transmission", 3GPP DRAFT; R1-151974 , vol. RAN WG1, no. Belgrade, Serbia; 20150420 - 20150424 19 April 2015 (2015-04-19), XP050934827, Retrieved from the Internet: URL:http://www.3gpp.org/ftp/Meetings_3GPP_ SYNC/RAN1/Docs/ [retrieved on 2015-04-19]

## Description

### Technical Field

The present invention relates to a network node and a user device. Furthermore, the present invention also relates to corresponding methods, and a computer program.

### Background

The downlink of the 3GPP Long Term Evolution (LTE) cellular communication system is based on Orthogonal Frequency Division Multiplex (OFDM) transmission, which uses time and frequency resource units for transmission. The smallest time-frequency resource unit, called Resource Element (RE), consists of a single complex sinusoid frequency (sub-carrier) in an OFDM symbol. For the purpose of scheduling transmissions to the different User Equipments (UEs), the resource elements are grouped into larger units called Physical Resource Blocks (PRBs). A PRB occupies a half of a subframe, called "slot", consisting of six or seven consecutive OFDM symbol intervals in time domain (0.5 milliseconds in total), and twelve consecutive sub-carrier frequencies in the frequency domain (180 kHz in total).
Downlink and uplink transmissions in LTE occur in an orthogonal manner, i.e., in each downlink (/uplink) subframe users are scheduled to receive (/transmit) in orthogonal radio resources by being granted access to non-overlapping sets of physical resource blocks. The downlink of the 3GPP LTE-A system also supports Multi-User Multiple-Input-Multiple-Output (MU-MIMO) transmission, where a set of users are orthogonally multiplexed in different antenna spatial layers (corresponding to orthogonal radio channels) while being granted access to the same or overlapping sets of time-frequency resources. In this way, more users can be simultaneously served by the base station. Downlink and uplink scheduling information, containing all the necessary parameters for receiving the downlink physical data shared channel or transmitting the uplink physical data shared channel, respectively, are transmitted to the UEs as Downlink Control Information (DCI) in a physical downlink control channel. The control information may include downlink or uplink resource assignments, user identity, transport format information (modulation, coding, payload size, etc.) Hybrid Automatic Repeat Request (HARQ) information, and MIMO information for the user device (e.g., precoding vector/matrix indicators, etc).
The LTE Rel-8/10 specifies a Physical Downlink Control Channel (PDCCH) as a signal carrying DCI for a user equipment device. The PDCCH is transmitted in a control region that can occupy up to three OFDM symbols at the beginning of each subframe, whereas the remaining part of the subframe forms the data region used for the transmission of the Physical Downlink Shared Channel (PDSCH).

The LTE Rel-11 introduced a new control channel, the Enhanced Physical Downlink Control Channel (EPDCCH), to increase the control channel capacity and to support transmission beam-forming, improved spatial reuse, and frequency-domain interference coordination, while taking into account the coexistence with the legacy PDCCH. To this end, the EPDCCH consists of a user device specific search-space configured via higher layer Radio Resource Control (RRC) signalling within the PDSCH resources (i.e., PRB pairs), and has the distinct characteristic of using demodulation reference signals for demodulation. A UE configured to use EPDCCH monitors the EPDCCH UE-specific search space instead of the PDCCH UE-specific search space. The PDCCH common search space is monitored regardless of whether and EPDCCH has been configured or not.

Recent advances in radio communications have revived the interest in superposed non-orthogonal Multiple Access (MA) schemes, where groups of user devices are selected in each Transmission Time Interval (TTI) to receive (in downlink) or to transmit (in uplink) data streams in the same set of time-frequency resources (i.e., Resource Blocks (RB), groups of resource blocks (RBG), sub-band) or in partially overlapping sets thereof. Examples of these techniques include Low-Density Spread (LDS) multiple access, Constellation Expansion Multiple Access (CEMA) and its version with adaptive rate (RA-CEMA), Semi-Orthogonal Multiple Access (SOMA), the NTT Non-Orthogonal Multiple Access (NOMA) scheme, etc.

The introduction of superposed non-orthogonal MA schemes in a system designed for orthogonal MA of users can severely impact the capacity of the downlink control channel due to the larger number of scheduled user devices per TTI.

In the related art 3GPP LTE system, one PDCCH/EPDCCH carries one DCI message using one of the available DCI formats. As the system may schedule multiple user devices, both in downlink and uplink, the LTE downlink control channel should be able to transmit multiple DCI messages within each subframe (at least one per scheduled user). Each DCI message is transmitted in a separate PDCCH/EPDCCH, resulting in multiple simultaneous PDCCH/ EPDCCH transmissions within each cell in a subframe. In addition, scheduling assignments/grants for carrier aggregation are transmitted to the user devices individually per component carrier. A major drawback of this method is that the control signalling overhead is directly proportional to the number of scheduled users (in downlink and uplink), thereby becoming a major limitation for non-orthogonal multiple access schemes.

The related art 3GPP LTE system also provides MU-MIMO transmission to spatially multiplexed users, thereby transmitting orthogonal downlink data signals to multiple users in the same or partially overlapping time-frequency resources. To support this feature, the LTE system transmits separate downlink control information to each individual user according to the DCI format 1D. With this approach, downlink control information that is common to all user devices spatially multiplexed in the same time-frequency resources has to be transmitted over the air as many times as the number of user devices multiplexed.
An alternative conventional solution proposes a method for processing downlink MU-MIMO transmission based upon receiving, at the user device, a separate control channel, in addition to the user-specific control channel, carrying downlink control information that is common to all user devices spatially multiplexed in the same time-frequency resources for MU-MIMO transmission. While this solution may achieve the goal of reducing control signalling overhead for enabling MU-MIMO transmission by transmitting the common control information only once, the user device specific MIMO control information is still transmitted in a separate user device specific control channel or transmitted implicitly with user specific reference signals. In both cases, additional signalling overhead is required for user device specific control information. The introduction of non-orthogonal multiple access schemes in downlink and/or uplink poses similar limitations to the capacity of the downlink control channel as MU-MIMO transmission. Also in this case, the number of scheduling assignments/grants per transmission time interval can significantly increase with the number of users non-orthogonally multiplexed for data transmission in the same time-frequency resources. Thereby, solutions that overcome the limitation of conventional solutions are needed.

3GPP document R1-152063, NTT DOCOMO: "Evaluation methodologies for downlink multiuser superposition transmissions", RAN WG1, Belgrade, Serbia,11 April 2015 (2015-04-11), discusses evaluation methodologies for downlink multiuser superposition transmissions. The 3GPP document R1-151974, INSTITUTE FOR INFORMATION INDUSTRY (III): "Discussion on downlink control channel for multiuser superposition transmission", RAN WG1, Belgrade, Serbia, 19 April 2015 (2015-04-19), provides a conventional solution for transmission of downlink signals in multiuser superposition transmissions.

### Summary

An objective of embodiments of the present invention is to provide a solution which mitigates or solves the drawbacks and problems of conventional solutions.
Another objective of embodiments of the present invention is to provide methods and devices for transmitting downlink control signals to a large number of user devices with reduced signalling overhead in a wireless communication system.

The present invention is defined by the appended claims and limited only by their scope. Embodiment(s) referred to in this description and not fully falling within the scope of said appended claims is (are) example(s) useful for understanding the present invention.

The above objectives are solved by the subject matter of the independent claims. Further advantageous implementation forms of the present invention can be found in the dependent claims.
According to a first aspect of the invention, the above mentioned and other objectives are achieved with a network node according to independent claim 1.

A number of advantages are provided by a network node according to the first aspect. An advantage over conventional solutions is to transmit group common control information and user device specific control information into a single control information message (the first signal), thereby reducing signalling overhead in the case of superposed transmission or reception of data as in the case of non-orthogonal multiple access of user devices to a common pool of radio resources of a physical downlink or uplink shared data channel.
In a first possible implementation form of the network node according to the first aspect, the user devices of the selected group share at least one common time and frequency resource for the superposed reception or transmission of data.
An advantage with this possible implementation form is that user devices selected to share at least one common time and frequency resource for the superposed reception or transmission of data can be addressed with a single control message comprising group control information common to the user devices, thereby reducing control signalling overhead.
In a second possible implementation form of the network node according to the first possible implementation form of the first aspect or to the first aspect as such, the first signal is transmitted in at least one control channel.
An advantage with this possible implementation form is that control information addressing a group of user devices selected to share at least one common time and frequency resource for the superposed reception or transmission of data can be dynamically transmitted on a transmission time interval basis.
In a third possible implementation form of the network node according to any of the preceding possible implementation forms of the first aspect or to the first aspect as such, the control information comprises user device control information for each user device of the selected group.
An advantage with this possible implementation form is that control signalling overhead is further reduced when addressing a group of user devices selected to share at least one common time and frequency resource for the superposed reception or transmission of data.
According to a second aspect of the invention, the above mentioned and other objectives are achieved with a user device as defined in independent claim 5.

A number of advantages are provides by a user device according to the second aspect. An advantage over conventional solutions is to receive group common control information and user device specific control information into a single control information message, thereby reducing signalling overhead in the case of superposed transmission or reception of data as in the case of non-orthogonal multiple access of user devices to a common pool of radio resources of a physical downlink or uplink shared data channel.

In a fourth possible implementation form of a network node according to any of the preceding possible implementation forms of the first aspect or to the first aspect as such or in a first possible implementation form of a user device according to the second aspect, the group control information indicates one or more in the group comprising: scheduling assignment information; multiple input multiple output, MIMO, transmission information; transport format information; number of scheduled user device information, multiple access mode information; and user device power allocation information.

An advantage with this possible implementation form is that a number of superposed non-orthogonal multiple access schemes for data transmission in the downlink or uplink can be realized with reduced control signalling overhead. A further advantage with this possible implementation form is that MIMO transmission techniques and superposed orthogonal multiple access schemes can be combined with reduced control signalling overhead.

In a fifth possible implementation form of a network node according to the fourth possible implementation form of the first aspect or in a second possible implementation form of a user device according to the first possible implementation form of the second aspect, the scheduling assignment information indicates a set of time and frequency resources assigned to the user devices of the selected group or a subset of time and frequency resources shared by the user devices of the selected group.

An advantage with this possible implementation form is that scheduling assignments for a group of user devices selected to share at least one common time and frequency resource for the superposed reception or transmission of data can be transmitted to all user devices in the group with a single multicast control message comprising group control information common to the user devices, thereby reducing control signalling overhead.

In a sixth possible implementation form of a network node according to the fourth possible implementation form of the first aspect or in a third possible implementation form of a user device according to the first possible implementation form of the second aspect, the MIMO transmission information indicates one or more in the group comprising: a MIMO pre-coding matrix index or pre-coding vector index common to the user devices of the selected group; a common number of data streams or layers available to the user devices of the selected group.

An advantage with this possible implementation form is that user devices can be configured with control information for MIMO transmission techniques and superposed non-orthogonal multiple access schemes with reduced control signalling overhead.

In a seventh possible implementation form of a network node according to the fourth possible implementation form of the first aspect or in a fourth possible implementation form of a user device according to the first possible implementation form of the second aspect, the multiple access mode information comprises an indication of one or more in the group comprising: non-orthogonal multiple access, semi-orthogonal multiple access; constellation expansion multiple access, rate adaptive constellation expansion multiple access, multiuser superposed transmission; and multi-user MIMO multiple access.

An advantage with this possible implementation form is that a number of superposed non-orthogonal multiple access schemes for data transmission in the downlink or uplink can be realized with reduced control signalling overhead.

In an eighth possible implementation form of a network node according to any of the preceding possible implementation forms of the first aspect or to the first aspect as such or in a fifth possible implementation form of a user device according to any of the preceding possible implementation forms of the second aspect or to the second aspect as such, the group control information indicates one or more in the group comprising: a common MIMO pre-coding matrix index or pre-coding vector index; a common number of data streams or layers available to the user devices of the selected group; and a set of common time and frequency resources assigned to the user devices of the selected group or a subset of time and frequency resources shared by the user devices of the selected group.

An advantage with this possible implementation form is that user devices can be configured with control information for MIMO transmission techniques and superposed non-orthogonal multiple access schemes with reduced control signalling overhead.

In a ninth possible implementation form of a network node according to the eight possible implementation form of the first aspect or in a sixth possible implementation form of a user device according to the fifth possible implementation form of the second aspect, the group control information further indicates a common modulation format.

An advantage with this possible implementation form is that multiple users can be configured for superposed transmission or reception of data with reduced control signalling overhead when using superposition schemes with common modulation format.

In a tenth possible implementation form of a network node according to any of the preceding possible implementation forms of the first aspect or to the first aspect as such or in a seventh possible implementation form of a user device according to any of the preceding possible implementation forms of the second aspect or to the second aspect as such, the user device control information indicates one or more in the group comprising: user device identity information; transport format information; hybrid automatic repeat request, HARQ, information; and user device power allocation information.

An advantage with this possible implementation form is that a number of superposed non-orthogonal multiple access schemes can be configured with user device specific control information while reducing the control signalling overhead.

In an eleventh possible implementation form of a network node according to the fourth possible implementation forms of the first aspect or in a eight possible implementation form of a user device according to the seventh possible implementation form of the second aspect, the user device power allocation information comprises one or more in the group comprising: downlink power allocation to least one user device of the user devices of the selected group; and uplink power allocation to least one user device of the user devices of the selected group.

An advantage with this possible implementation form is that user devices in the group of user devices selected for superposed transmission of reception of data can be configured to operate with different transmission power.

In a twelfth possible implementation form of a network node according to the fourth possible implementation forms of the first aspect or in a ninth possible implementation form of a user device according to the seventh possible implementation form of the second aspect, the transport format information comprises a common modulation format to the user devices of the selected group or a modulation and coding scheme indicator.

An advantage with this possible implementation form is that control signalling overhead can be reduced.

In a thirteenth possible implementation form of a network node according to any of the preceding possible implementation forms of the first aspect or to the first aspect as such or in a eight possible implementation form of a user device according to any of the preceding possible implementation forms of the second aspect or to the second aspect as such, the user device control information indicates a channel code rate; and a multiuser interleaving scheme.

An advantage with this possible implementation form is that the code rate and the multiuser interleaving scheme are signalled only to the receiver that needs such information for performing reception of data.

In a fourteenth possible implementation form of a network node according to any of the preceding possible implementation forms of the first aspect or to the first aspect as such or in a ninth possible implementation form of a user device according to any of the preceding possible implementation forms of the second aspect or to the second aspect as such, the user device control information indicates user device power allocation; a modulation scheme and a channel code rate or a modulation and coding scheme indicator; a user device specific MIMO pre-coding matrix index or pre-coding vector index.

An advantage with this possible implementation form is that the modulation scheme and power allocation, which are user device-specific in some of the aforementioned superposition schemes, are signalled only to the receiver that needs such information for performing reception of data.

In a fifteenth possible implementation form of a network node according to the thirteenth or fourteenth possible implementation forms of the first aspect or to the first aspect as such or in a tenth possible implementation form of a user device according to the eighth or ninth possible implementation forms of the second aspect or to the second aspect as such, the user device control information further indicates number of user device specific data streams or layers available to the user devices of the selected group.

An advantage with this possible implementation form is that user devices can be configured with control information for MIMO transmission techniques and superposed non-orthogonal multiple access schemes with reduced control signalling overhead.

In a sixteenth possible implementation form of a network node according to any of the preceding possible implementation forms of the first aspect or to the first aspect as such or in an eleventh possible implementation form of a user device according to any of the preceding possible implementation forms of the second aspect or to the second aspect as such, the control information is comprised in a single downlink control information format.
An advantage with this possible implementation form is an efficient downlink signalling scheme for superposed non-orthogonal multiple access transmission schemes comprising a multicast transmission of common control information to a group of user devices and user device-specific control information to each user device in the group.
According to a third aspect of the invention, the above mentioned and other objectives are achieved with a method in a network node as defined in independent claim 14.

According to a fourth aspect of the invention, the above mentioned and other objectives are achieved with a method in a user device as defined in independent claim 15.

The advantages of the methods according to the third aspect or the fourth aspect are the same as those for the corresponding device claims according to the first and second aspects.
The present invention also relates to a computer program, characterized in code means, which when run by processing means causes said processing means to execute any method according to the present invention. In an exemplary embodiment, said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.
Further applications and advantages of the present invention will be apparent from the following detailed description.

### Brief Description of the Drawings

The appended drawings are intended to clarify and explain different embodiments of the present invention, in which:
- Fig. 1 shows a network node according to an embodiment of the present invention;
- Fig. 2 shows a method according to an embodiment of the present invention;
- Fig. 3 shows a user device according to an embodiment of the present invention;
- Fig. 4 shows another method according to an embodiment of the present invention;
- Fig. 5 illustrates signalling according to an embodiment of the present invention;
- Fig. 6 shows an exemplary message format according to an embodiment of the present invention;
- Fig. 7 shows a wireless communication system according to an embodiment of the present invention; and
- Fig. 8 illustrates the transmission of group control information and user device specific control information according to an embodiment of the present invention.

### Detailed Description

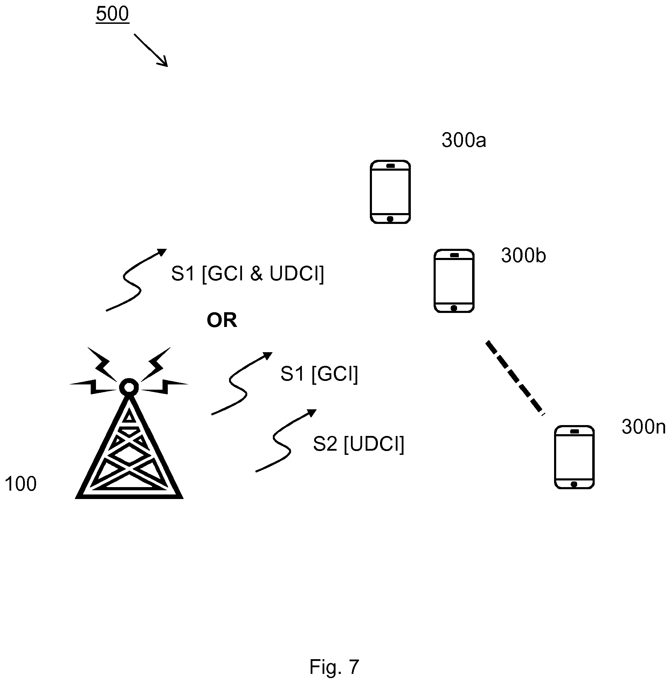

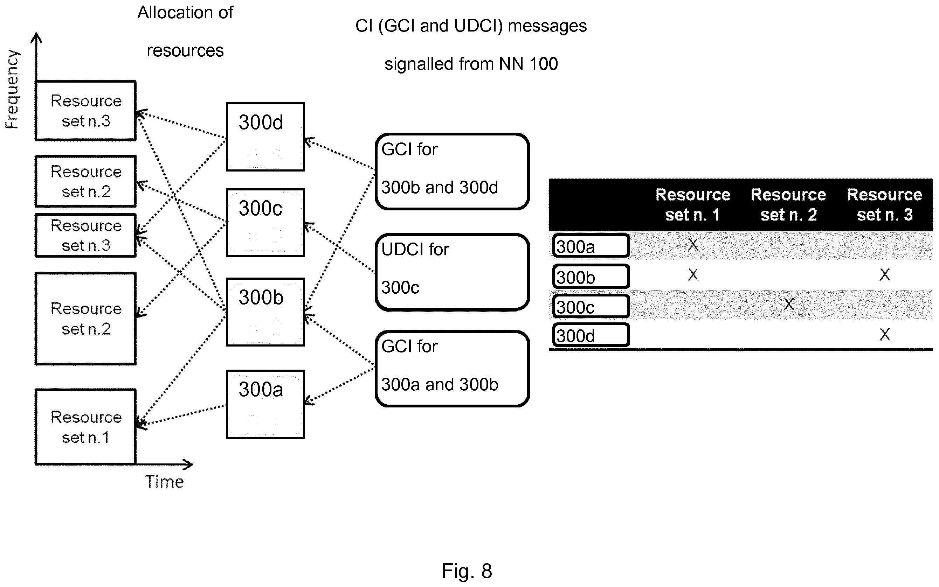

In a wireless communication system 500 (as shown for example in Fig. 7) with superposed non-orthogonal data transmission, groups of user devices can be selected in each transmission time unit (e.g., a subframe in LTE) to receive (in downlink) or to transmit (in uplink) using data channels in the same or partially overlapping time-frequency resources, i.e., Resource Blocks (RB), groups of resource blocks (RBG), sub-bands, etc. It is therefore a problem to transmit downlink control information efficiently to a large number of user devices in each transmission time unit with reduced signaling.
Therefore, embodiments of the present invention disclose to transmit control information, e.g. by means of a multicast control signal, from a network node to a group of user devices selected for transmission or reception of data in the same or partially overlapping set of radio resources, by e.g. means of a Downlink Control Information (DCI) format comprising group control information common to the selected group of user devices and user device control information specific to individual user devices.

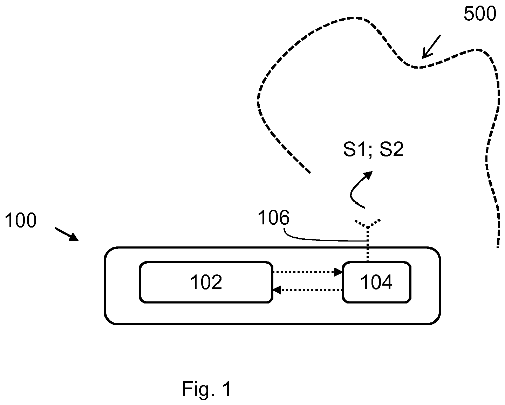

Fig. 1 shows a network node 100 according to an embodiment of the present invention. The network node 100 has the capabilities to communicate with other communication devices (not shown in Fig. 1) in the wireless communication system 500. In this respect the network node 100 comprises a transceiver 104 which in this embodiment is coupled to an antenna unit 106. The transceiver 104 is further communicably coupled to a processor 102 of the network node 100.
The processor 102 of the network node 100 is configured to select a group of user devices 300a, 300b,..., 300n (see Fig. 8) for superposed reception or transmission of data. The processor 102 is further configured to determine Control Information (CI) for, or specific to the user devices 300a, 300b,..., 300n of the selected group. The CI comprises Group Control Information (GCI) common to the user devices 300a, 300b,..., 300n of the selected group and at least one User Device Control Information (UDCI) specific to at least one user device of the user devices 300a, 300b,..., 300n of the selected group. In detail the network node 100 may determine a separate UDCI for each user device 300a, 300b,..., 300n of the selected group.
The transceiver 104 of the network node 100 is configured to transmit a first signal S1 which is addressed to the user devices 300a, 300b,..., 300n of the selected group in a first set of time and frequency resources. In other words, all user devices 300a, 300b,..., 300n of the selected group read the first signal S1. The first signal S1 comprises the GCI and the UDCI. Alternatively or additionally (e.g. in a different configuration) the transceiver 104 of the network node 100 is configured to transmit a first signal S1 which is addressed to the user devices 300a, 300b,..., 300n of the selected group in a first set of time and frequency resources. In other words, all user devices 300a, 300b,..., 300n of the selected group read the first signal S1. The first signal S1 comprises the GCI. The transceiver 104 of the network node 100 is according to this aspect further configured to transmit a second signal S2 which is addressed to at least one user device of the user devices 300a, 300b,..., 300n of the selected group in a second set of time and frequency resources. The second signal S2 comprises the UDCI. In detail the network node 100 may send to each of the user device 300a, 300b,..., 300n of the selected group a respective signal S2 in the second set of time frequency resources comprising the UDCI corresponding to the respective user device 300a, 300b,..., 300n.

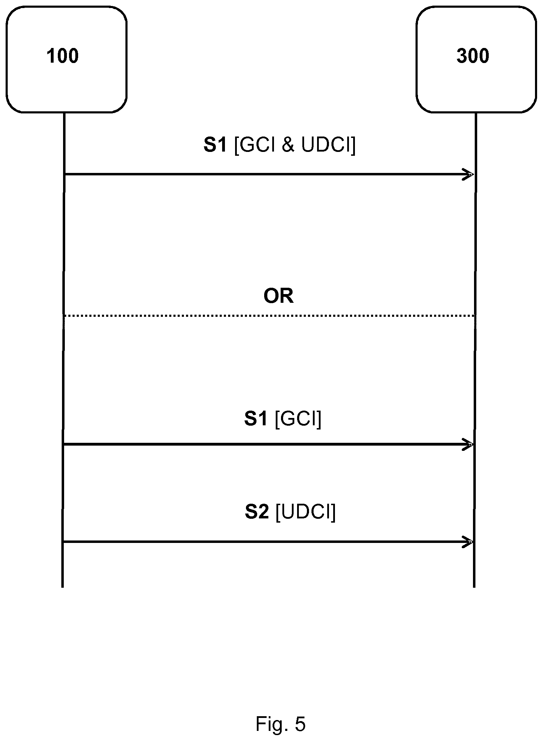

Fig. 5 illustrates the signalling between the network node 100 and a user device 300 according to an embodiment of the present invention. As mentioned above, the network node 100 determines the GCI and the UDCI. In one aspect as shown in the upper part of Fig. 5, a first signal S1 is transmitted to the user device 300. The first signal S1 indicates the GCI and the UDCI. However, in another aspect shown in the lower part of Fig. 5 the network node 100 transmits a first signal S1 and a second signal S2 to the user device 300. The first signal S1 indicates the GCI and the second signal S2 indicates the UDCI to the user device 300. It should also be noted that the first signal S1 and second signal S2 are transmitted/signalled in different sets of time and frequency resources.

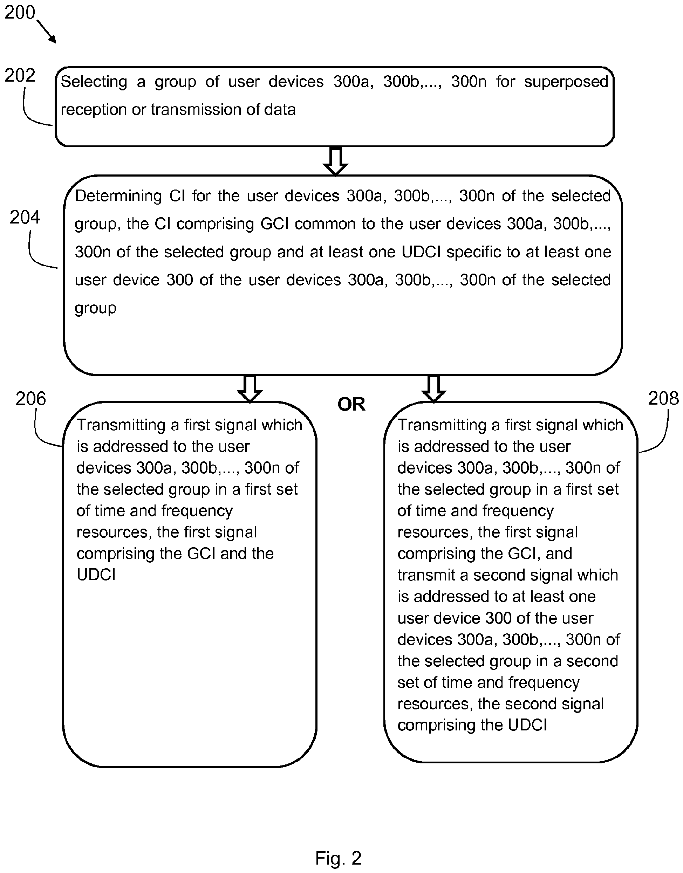

Fig. 2 shows a method 200 according to an embodiment of the present invention. The method 200 may be executed in a network node 100, such as the one shown in Fig. 1. The method 200 comprises the step of selecting 202 a group of user devices 300a, 300b,..., 300n for superposed reception or transmission of data. The method 200 further comprises the step of determining 204 CI for the user devices 300a, 300b,..., 300n of the selected group, the CI comprising GCI common to the user devices 300a, 300b,..., 300n of the selected group and at least one UDCI specific to at least one user device 300 of the user devices 300a, 300b,..., 300n of the selected group. The method 200 further comprises the step of transmitting 206 a first signal S1 which is addressed to the user devices 300a, 300b,..., 300n of the selected group in a first set of time and frequency resources, the first signal comprising the GCI and the UDCI. Or, the method 200 further comprises the step of transmitting 208 a first signal S1 which is addressed to the user devices 300a, 300b,..., 300n of the selected group in a first set of time and frequency resources, the first signal S1 comprising the GCI, and transmit a second signal S2 which is addressed to at least one user device 300 of the user devices 300a, 300b,..., 300n of the selected group in a second set of time and frequency resources, the second signal S2 comprising the UDCI.

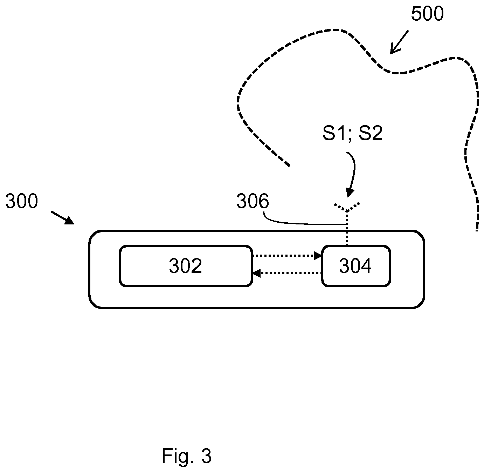

Fig. 3 shows a user device 300 according to an embodiment of the present invention. The user device 300 comprises a processor 302 communicably coupled to a transceiver 304. In this example, the user device 300 also comprises an antenna unit 306 coupled to the transceiver 304. The transceiver 304 of the user device 300 is configured to receive a first signal S1 in a first set of time and frequency resources, the first signal S1 comprising GCI common to a selected group of user devices 300a, 300b,..., 300n and UDCI specific to the user device 300. Or, the transceiver 304 of the user device 300 is configured to receive a first signal S1 in a first set of time and frequency resources, the first signal S1 comprising the GCI, and receive a second signal S2 in a second set of time and frequency resources, the second signal S2 comprising the UDCI. The processor 302 of the user device 300 is configured to decode the GCI and the UDCI. The transceiver 304 of the user device 300 further is configured to receive or transmit data according to the GCI and the UDCI.

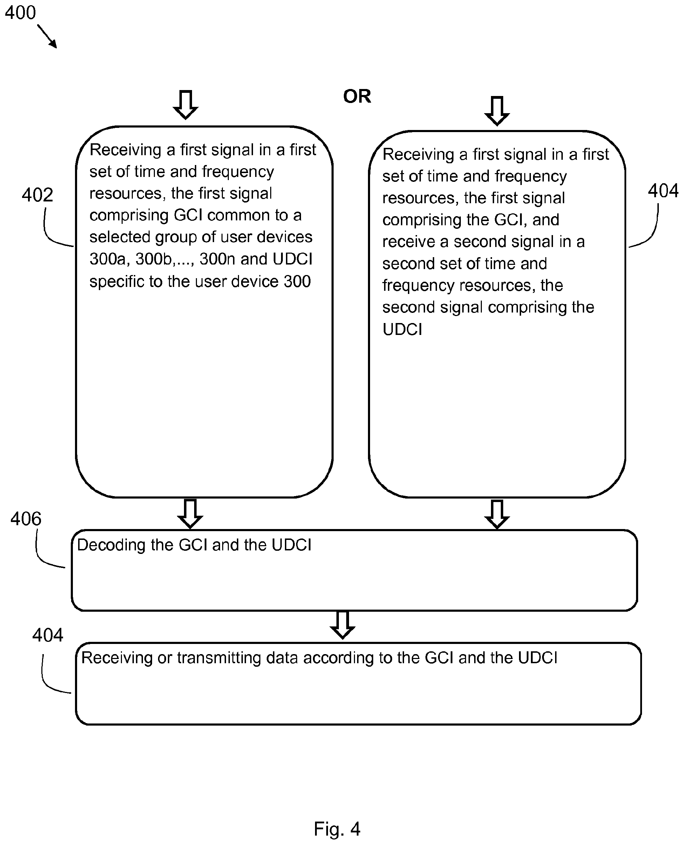

Fig. 4 shows a corresponding method 400 according to an embodiment of the present invention. The method 400 may be executed in a user device 300, such as the one shown in Fig. 3. The method 400 comprises the step of receiving 402 a first signal S1 in a first set of time and frequency resources, the first signal S1 comprising GCI common to a selected group of user devices 300a, 300b,..., 300n and UDCI specific to the user device 300. Or, the method 400 comprises the step of receiving 404 a first signal S1 in a first set of time and frequency resources, the first signal S1 comprising the GCI, and further to receive a second signal S2 in a second set of time and frequency resources, the second signal S2 comprising the UDCI. The method 400 further comprises the step of decoding 406 the GCI and the UDCI. The method 400 further comprises the step of receiving or transmitting data 408 according to the GCI and the UDCI. Therefore, upon the step of receiving 402 a first signal S1 or the step of receiving 404 a first signal S1 and a second signal S2, the user device 300 receives CI necessary for further receiving data in a downlink data channel or for transmitting data in an uplink data channel.

According to an embodiment of the present invention, the first signal S1 and the second signal S2 are transmitted in at least one control channel. Therefore, the GCI may be multicast to the intended group of user devices scheduled in a certain TTI through the PDCCH or EPDCCH. In addition, the UDCI may be unicast to each user devices scheduled in a certain TTI through the PDCCH or EPDCCH.

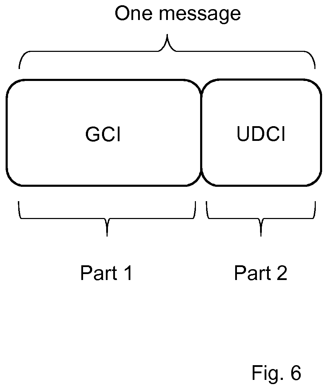

According to another embodiment of the present invention, the CI is comprised in a single (multicast) downlink control information format. Fig. 6 illustrates such an embodiment in which the single (multicast) downlink control information format comprises of two parts. The first part comprising the GCI and the second part comprises the UDCI. The multicast downlink control information format may be a control message transmitted by the network node 100 to user devices according known control protocols. It should be noted that the two parts need not be separated in the control message and may e.g. be interleaved in the control message.

Fig. 7 illustrates a wireless communication system 500 according to an embodiment of the present invention. In this example the network node 100 is a radio network base station which transmits the first S1 and/or the second signal S2 in the downlink to a number of selected user devices 300a, 300b,..., 300n. The network node 100 transmits a first signal comprising the GCI and the UDCI; or the network node transmits a first signal S1 comprising the CGI and a second signal S2 comprising the UDCI. The user devices 300a, 300b,..., 300n derives the GCI and the UDCI and transmits and/or receives according to the GCI and the UDCI.
Fig. 8 illustrates an example of transmission of a GCI message and a UDCI message to dynamically allocate radio resources to user devices within a TTI. The x-axis represents time and the y-axis frequency. In this example, four user devices 300a, 300b, 300c, 300d are assigned multiple sets of possible non-contiguous time-frequency resources (in time or frequency, or both) blocks for data transmission or reception. Each set of time-frequency resources may be assigned to one or more user devices.
In particular, the group of user devices 300a and 300b is assigned to use resource set 1. The Network Node (NN) 100 (not shown in Fig. 8) determines CI for, or specific to the group of user devices 300a and 300b. The CI comprises GCI common to the user devices 300a and 300b of the selected group and at least one UDCI specific to at least one user device of the user devices 300a and 300b of the selected group.
Similarly, the group of user devices 300b and 300d is configured to receive or transmit data in the resource set 3 according to the same method as described above. Hence, the network node 100 determines CI for, or specific to the group of user devices 300b and 300d. The CI comprises GCI common to the user devices 300b and 300d of the selected group and at least one UDCI specific to at least one user device of the user devices 300b and 300d of the selected group.
User device 300c in Fig. 8 is configured to receive or transmit data in the resource set 2. No other user devices are assigned to resource set 2. The network node 100 determines CI for user device 300c comprising only UDCI and sends it to user device 300c.
Hence, it can be seen, that per selected group a single control message (the first signal) is sufficient to at least signal group specific control information (GCI) to the members (user devices) of the selected group. Furthermore, user device specific control information (UDCI) specific to each user device of a selected group can be sent in the same message or a further message (second signal).
Therefore, the CI may refer to a scheduling grant for superposed non-orthogonal multiple access of a group of user devices to either the downlink or the uplink the data channel. The advantage of this method over conventional solutions is to transmit GCI and UDCI into a single multicast downlink control information format (i.e., a single multicast control message), thereby reducing signaling overhead in the case of non-orthogonal multiple access of user devices to a common pool of radio resources of a physical downlink or uplink shared data channel. Therefore, all user devices assigned to access the same (downlink or uplink) radio resources receive both GCI and UDCI by receiving the disclosed downlink control information format. This has the advantage to reduce signaling overhead and increase the efficiency of the resource utilization.

In one embodiment of the present invention, the control information specific to individual user devices 300a, 300b,..., 300n, i.e. UDCI, in the selected group of user device may, in this case, further be transmitted to the individual user devices with a separate control message i.e., in a separate user-specific control information format. This has the advantage to simplify the design of the downlink control information formats, while still reducing the control signaling overhead compared to the case in which the GCI common to all user devices in the group is transmitted separately to each individual user device scheduled for non-orthogonal multiple access to the same downlink or uplink radio resources.

In one embodiment of the present invention, the GCI for superposed transmission or reception of data in shared or partially overlapping radio resources of a data channel may include one or more information in the group comprising: scheduling assignment information; multiple input multiple output, MIMO, transmission information; transport format information; number of scheduled user device information, multiple access mode information; and user device power allocation information.

In one embodiment of the present invention, the scheduling assignment information indicates or specifies the radio resources (e.g. resource block, group of resource blocks, sub-bands, etc.) of a physical shared data channel (e.g., in downlink or in uplink) to be used by a group of user devices 300a, 300b,..., 300n selected for non-orthogonal multiple access. That is, a set of time and frequency resources assigned to the user devices 300a, 300b,..., 300n of the selected group or a subset of time and frequency resources shared by the user devices 300a, 300b,..., 300n of the selected group.

In one embodiment of the present invention, the MIMO transmission information may indicate one or a combination of: a MIMO pre-coding matrix index or pre-coding vector index common to the user devices 300a, 300b,..., 300n of the selected group; a common number of data streams or layers available to the user devices 300a, 300b,..., 300n of the selected group.

In one embodiment of the present invention, the number of user devices scheduled for superposed transmission or reception of data in shared or partially overlapping radio resources of a data channel indicates the number of user devices assigned to simultaneously access a common or overlapping set of radio resources in non-orthogonal way. A non-orthogonal multiple access mode indicates the multiple access scheme the user devices should adopt to access the common set of radio resources, such as non-orthogonal multiple access, superposition coding, semi-orthogonal multiple access; constellation expansion multiple access, rate adaptive constellation expansion multiple access, multiuser superposed transmission; multi-user MIMO multiple access, and the like. For the case of downlink multiple access, this information enables each user device 300a, 300b,..., 300n of the selected group to identify and decode its own data after joint detection of all data.

In one embodiment of the present invention, the multiple access mode information indicates whether a non-orthogonal multiple access scheme is configured for superposed transmission or reception of data. The non-orthogonal multiple access scheme can refer to one or more in the group comprising: non-orthogonal multiple access, semi-orthogonal multiple access; constellation expansion multiple access, rate adaptive constellation expansion multiple access, multiuser superposed transmission; and multi-user MIMO multiple access. This can e.g. be realized with a one-bit flag in a multicast control information signal.

In one embodiment of the present invention, the user device power allocation information comprises one or more in the group comprising: downlink power allocation to least one user device 300 of the user devices 300a, 300b,..., 300n of the selected group; and uplink power allocation to least one user device 300 of the user devices 300a, 300b,..., 300n of the selected group. The user device power allocation information may be used to indicate common power control settings for shared data channel transmission or reference signal transmission with non-orthogonal multiple access. The power settings may refer also to MIMO transmission, such as power settings for all user devices in a MIMO stream or layer in the case of non-orthogonal multiple access with SU-MIMO transmission, or power settings for all user devices per transmission beam in the case of non-orthogonal multiple access with transmission beam-forming or MU-MIMO. This information can further be utilized to enable advanced receiver processing, such as successive interference cancellation/suppression. For the case of uplink multiple access, this information enables each user device to use the proper shared data channel resources and transmission format for multiple access to the data channel.

In one embodiment of the present invention, the GCI indicates one or more in the group comprising: a common MIMO pre-coding matrix index or pre-coding vector index; a common number of data streams or layers available to the user devices 300a, 300b,..., 300n of the selected group; and a set of common time and frequency resources assigned to the user devices 300a, 300b,..., 300n of the selected group or a subset of time and frequency resources shared by the user devices 300a, 300b,..., 300n of the selected group.

In a further embodiment of the present invention, the GCI further indicates a common modulation format. This is particularly convenient in non-orthogonal MA systems using a common modulation format shared among the user device signals, e.g. in Rate Adaptive Constellation Expansion MA systems.

In another embodiment of the present invention, the UDCI for non-orthogonal multiple access to downlink or uplink shared data channel resources may include information in the group comprising: user device identity information; transport format information; hybrid automatic repeat request, HARQ, information; and user device power allocation information.

In one embodiment of the present invention, the user device identity information indicates which user devices the group-specific downlink control information format is intended for, thereby enabling group of user devices dynamically scheduled, for instance, on a TTI basis to receive and decode control information for non-orthogonal multiple access to shared downlink or uplink radio resources. The order in which user device identities appear in the downlink control information format can further enable the corresponding user devices to identify the associated additional user device specific control information within the control signal format. In one example, the order in which user specific information appears in a field can be mapped implicitly or explicitly to the order in which the user identities appear in the user identity field of the control information format.

In one embodiment of the present invention, depending on the adopted non-orthogonal multiple access scheme the transport format information may indicate parts or all transport format information intend for a user device. Transport format information common to all scheduled user devices (if any common information exists) can be transmitted as part of the common downlink control information, whilst user device specific transport format information can be transmitted in a separate field of the control signal format.

In one embodiment of the present invention, the transport format information comprises a common modulation format to the user devices 300a, 300b,..., 300n of the selected group or a modulation and coding scheme indicator.

In one embodiment of the present invention, the HARQ information refers to user device specific information for retransmission of previously failed transmission attempts. The information may comprise number of retransmission attempt(s), transmission format, modulation and coding rate.

In one embodiment of the present invention, the user device power allocation information comprises one or more in the group comprising: downlink power allocation to least one user device 300 of the user devices 300a, 300b,..., 300n of the selected group; and uplink power allocation to least one user device 300 of the user devices 300a, 300b,..., 300n of the selected group. The power allocation information may indicate the fraction of the overall transmission power used to transmit information of each user device within the same pool of shared data radio resources. Power allocation information may further indicate transmission power used for user device specific pilot reference signals within the pool of shared data radio resources assigned for non-orthogonal multiple access. This power allocation information may comprise, e.g., a power offset compared to the data transmission power used for the user device. Power control settings may further be resource specific, i.e., resource block specific, group of resource block specific, or sub-band specific.

In one embodiment of the present invention, the UDCI indicates a channel code rate; and a multiuser interleaving scheme. This embodiment is convenient for non-orthogonal MA schemes that do not require CodeWord-level Interference Cancellation (CWIC), because a user device 300 only needs to know the code rate used to encode its own codewords and the multiuser interleaving scheme.

In the following description some exemplary embodiments of the present invention are described. These embodiments describe exemplary content of the group control information GCI and the user device control information UDCI. It should also be noted that LTE terminology often is used in the present disclosure to describe and explain embodiments of the present invention. However, embodiments of the present invention are not limited to an LTE system and may be applied in all relevant wireless communication systems.

In one exemplary embodiment of the present invention, the GCI sent to the group of user devices comprises at least one of:
- The set of resources assigned to the group of user devices or the subset of resources shared among said group of users;
- A common modulation format;
- A common MIMO pre-coding matrix index (PMI) or a pre-coding vector index (PVI); and
- A common number of streams (or layers) available to all user devices.

In this exemplary embodiment the UDCI sent to each of the user devices in the group comprises at least one of:
- The channel code rate; and
- A multiuser interleaving scheme specifying the modulation label bit allocation to user device.

This exemplary embodiment refers to non-orthogonal multiple access schemes using a common modulation format, like Rate-adaptive constellation Expansion Multiple Access. Here, no power allocation to user devices is performed and the user devices are multiplexed on the codewords domain. The parameters common to all user devices are signaled using the GCI and the user device-specific parameters are signaled using the UDCI.

In one exemplary embodiment of the present invention, the GCI sent to the group of user devices comprises at least one of:
- The set of resources assigned to the group of user devices or the subset of resources shared among said group of users;
- A common MIMO pre-coding matrix index (PMI) or a pre-coding vector index (PVI); and
- A common number of streams (or layers) available to all user device.

In this exemplary embodiment the UDCI sent to each of the user devices in the group comprises at least one of:
- User device power allocation;
- A modulation scheme and channel code rate, or a modulation and coding scheme indicator; and
- A user device-specific MIMO pre-coding matrix index (PMI) or a pre-coding vector index (PVI).

This exemplary embodiment refers to non-orthogonal multiple access (MA) schemes performing linear superposition like NOMA and SOMA where power allocation coefficients are specific to each user device. The parameters common to all user devices are signaled using the GCI and the user device-specific parameters are signaled using the UDCI.

The network node 100 or a radio network node, or base station, e.g. a Radio Base Station (RBS), which in some networks may be referred to as transmitter, "eNB", "eNodeB", "NodeB" or "B node", depending on the technology and terminology used. The radio network nodes may be of different classes such as e.g. macro eNodeB, home eNodeB or pico base station, based on transmission power and thereby also cell size. The radio network node can be a Station (STA), which is any device that contains an IEEE 802.11-conformant Media Access Control (MAC) and Physical Layer (PHY) interface to the Wireless Medium (WM).

The user device 300 or a User Equipment (UE), mobile station, wireless terminal and/or mobile terminal is enabled to communicate wirelessly in a wireless communication system, sometimes also referred to as a cellular radio system. The User Equipment (UE) may further be referred to as mobile telephones, cellular telephones, computer tablets or laptops with wireless capability. The UEs in the present context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM).

Furthermore, any method according to the present invention may be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that the present first network node and second network node comprises the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processors of the present devices may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.
Finally, it should be understood that the present invention is not limited to the embodiments described above, but also relates to and incorporates all embodiments within the scope of the appended independent claims. The scope of the present invention is determined only by the scope of the appended claims.

## Claims

1. Network node for a wireless communication system (500) using non-orthogonal multiple access the network node (100) comprising:
a processor (102) configured to
select a group of user devices (300a, 300b,..., 300n) for superposed reception or superposed transmission of data,
determine control information, CI, for the user devices (300a, 300b,..., 300n) of the selected group, the control information, CI, comprising group control information, GCI, common to the user devices (300a, 300b,..., 300n) of the selected group and at least one user device control information, UDCI, specific to at least one user device (300) of the user devices (300a, 300b,..., 300n) of the selected group, said control information, CI, being comprised in a single downlink control information, DCI, format; and a transceiver (104) configured to
transmit a first signal which is addressed to the user devices (300a, 300b,..., 300n) of the selected group in a first set of time and frequency resources, the first signal comprising the group control information, GCI, and the user device control information, UDCI; or
transmit a first signal which is addressed to the user devices (300a, 300b,..., 300n) of the selected group in a first set of time and frequency resources, the first signal comprising the group control information, GCI, and transmit a second signal which is addressed to at least one user device (300) of the user devices (300a, 300b,..., 300n) of the selected group in a second set of time and frequency resources, the second signal comprising the user device control information, UDCI.

2. Network node (100) according to claim 1, wherein the user devices (300a, 300b,..., 300n) of the selected group share at least one common time and frequency resource for the superposed reception or transmission of data.

3. Network node (100) according to claim 1 or 2, wherein the first signal is transmitted in at least one control channel.

4. Network node (100) according to any of the preceding claims, wherein the control information, CI, comprises user device control information, UDCI, for each user device of the selected group.

5. User device for a wireless communication system (500) using non-orthogonal multiple access, the user device (300) comprising:
a transceiver (304) configured to
receive a first signal in a first set of time and frequency resources, the first signal comprising group control information, GCI, common to a selected group of user devices (300a, 300b,..., 300n) and user device control information, UDCI, specific to the user device (300); or
receive a first signal in a first set of time and frequency resources, the first signal comprising the group control information, GCI, and receive a second signal in a second set of time and frequency resources, the second signal comprising the user device control information, UDCI, wherein the group control information, GCI, and the user device control information, UDCI, are comprised in a control informaiton, CI, comprised in a single downlink control information, DCI, format; and
a processor (302) configured to
decode the group control information, GCI, and the user device control information, UDCI, and
wherein the transceiver (304) further is configured to receive or transmit data according to the group control information, GCI, and the user device control information, UDCI.

6. Network node (100) or user device (300) according to any of the preceding claims, wherein the group control information, GCI, indicates one or more in the group comprising: scheduling assignment information; multiple input multiple output, MIMO, transmission information; transport format information; number of scheduled user device information, multiple access mode information; and user device power allocation information.

7. Network node (100) or user device (300) according any preceding claims, wherein the group control information, GCI, indicates one or more in the group comprising: a common MIMO pre-coding matrix index or pre-coding vector index; a common number of data streams or layers available to the user devices (300a, 300b,..., 300n) of the selected group; and a set of common time and frequency resources assigned to the user devices (300a, 300b,..., 300n) of the selected group or a subset of time and frequency resources shared by the user devices (300a, 300b,..., 300n) of the selected group.

8. Network node (100) or user device (300) according to claim 7, wherein the group control information, GCI, further indicates a common modulation format.

9. Network node (100) or user device (300) according to any of the preceding claims, wherein the user device control information, UDCI, indicates one or more in the group comprising: user device identity information; transport format information; hybrid automatic repeat request, HARQ, information; and user device power allocation information.

10. Network node (100) or user device (300) according to any of the preceding claims, wherein the user device control information, UDCI, indicates a channel code rate; and a multiuser interleaving scheme.

11. Network node (100) or user device (300) according to any of the preceding claims, wherein the user device control information, UDCI, indicates user device power allocation; a modulation scheme and a channel code rate or a modulation and coding scheme indicator; a user device specific MIMO pre-coding matrix index or pre-coding vector index.

12. Network node (100) or user device (300) according to claim 10 or 11, wherein the user device control information, UDCI, further indicates number of user device specific data streams or layers available to the user devices (300a, 300b,..., 300n) of the selected group.

13. Network node (100) or user device (300) according to any of the preceding claims, wherein the control information, CI, is comprised in a single multicast downlink control information, DCI, format.

14. Method (200) in a network node for a wireless communication system (500) using non-orthogonal multiple access, the method comprising:
selecting (202) a group of user devices (300a, 300b,..., 300n) for superposed reception or superposed transmission of data;
determining (204) control information, CI, for the user devices (300a, 300b,..., 300n) of the selected group, the control information, CI, comprising group control information, GCI, common to the user devices (300a, 300b,..., 300n) of the selected group and at least one user device control information, UDCI, specific to at least one user device (300) of the user devices (300a, 300b,..., 300n) of the selected group, said control information, CI, being comprised in a single downlink control information, DCI, format;
transmitting (206) a first signal which is addressed to the user devices (300a, 300b,..., 300n) of the selected group in a first set of time and frequency resources, the first signal comprising the group control information, GCI, and the user device control information, UDCI; or
transmitting (208) a first signal which is addressed to the user devices (300a, 300b,..., 300n) of the selected group in a first set of time and frequency resources, the first signal comprising the group control information, GCI, and transmitting a second signal which is addressed to at least one user device (300) of the user devices (300a, 300b,..., 300n) of the selected group in a second set of time and frequency resources, the second signal comprising the user device control information, UDCI.

15. Method (400) in a user device for a wireless communication system (500) using non-orthogonal multiple access, the method comprising:
receiving (402) a first signal in a first set of time and frequency resources, the first signal comprising group control information, GCI, common to a selected group of user devices (300a, 300b,..., 300n) and user device control information, UDCI, specific to the user device (300); or
receiving (404) a first signal in a first set of time and frequency resources, the first signal comprising the group control information, GCI, and receiving a second signal in a second set of time and frequency resources, the second signal comprising the user device control information, UDCI, wherein the group control information, GCI, and the user device control information, UDCI, are comprised in a control informaiton, CI, comprised in a single downlink control information, DCI, format; and
decoding (406) the group control information, GCI, and the user device control information, UDCI;
receiving or transmitting (408) data according to the group control information, GCI, and the user device control information, UDCI.

16. Computer program with a program code comprising instructions, which, when executed by a computer, cause said computer to carry out a method according to claim 14 or claim 15.

## Patentansprüche

1. Netzwerkknoten für ein Drahtloskommunikationssystem (500), das nichtorthogonalen Mehrfachzugriff verwendet, wobei der Netzwerkknoten (100) Folgendes umfasst:
einen Prozessor (102), der für Folgendes ausgelegt ist:
Auswählen einer Gruppe von Benutzergeräten (300a, 300b,..., 300n) für überlagerten Empfang oder überlagerte Übertragung von Daten,
Bestimmen der Steuerinformationen (CI) für die Benutzergeräte (300a, 300b,..., 300n) der ausgewählten Gruppe, wobei die Steuerinformationen (CI) Gruppensteuerinformationen (GCI) umfassen, die den Benutzergeräten (300a, 300b,..., 300n) der ausgewählten Gruppe gemeinsam sind, und mindestens eines Satzes von Benutzergeräte-Steuerinformationen (UDCI), die für mindestens ein Benutzergerät (300) der Benutzergeräte (300a, 300b,..., 300n) der ausgewählten Gruppe spezifisch sind, wobei die Steuerinformationen (CI) in einem einzelnen Downlink-Steuerinformationen (DCI)-Format enthalten sind; und einen Transceiver (104), der für Folgendes ausgelegt ist:
Übertragen eines ersten Signals, das an die Benutzergeräte (300a, 300b,..., 300n) der ausgewählten Gruppe in einem ersten Satz von Zeit- und Frequenzressourcen adressiert ist, wobei das erste Signal die Gruppensteuerinformationen (GCI) und die Benutzergeräte-Steuerinformationen (UDCI) umfasst; oder
Übertragen eines ersten Signals, das an die Benutzergeräte (300a, 300b,..., 300n) der ausgewählten Gruppe in einem ersten Satz von Zeit- und Frequenzressourcen adressiert ist, wobei das erste Signal die Gruppensteuerinformationen (GCI) umfasst, und Übertragen eines zweiten Signals, das an mindestens ein Benutzergerät (300) der Benutzergeräte (300a, 300b,..., 300n) der ausgewählten Gruppe in einem zweiten Satz von Zeit- und Frequenzressourcen adressiert ist, wobei das zweite Signal die Benutzergeräte-Steuerinformationen (UDCI) umfasst.

2. Netzwerkknoten (100) gemäß Anspruch 1, wobei die Benutzergeräte (300a, 300b,..., 300n) der ausgewählten Gruppe mindestens eine gemeinsame Zeit- und Frequenzressource für den überlagerten Empfang oder die Übertragung von Daten teilen.

3. Netzwerkknoten (100) gemäß Anspruch 1 oder 2, wobei das erste Signal in mindestens einem Steuerkanal übertragen wird.

4. Netzwerkknoten (100) gemäß einem der vorhergehenden Ansprüche, wobei die Steuerinformationen (CI) Benutzergeräte-Steuerinformationen (UDCI) für jedes Benutzergerät der ausgewählten Gruppe umfassen.

5. Benutzergerät für ein Drahtloskommunikationssystem (500), das nichtorthogonalen Mehrfachzugriff verwendet, wobei das Benutzergerät (300) Folgendes umfasst:
einen Transceiver (304), der für Folgendes ausgelegt ist:
Empfangen eines ersten Signals in einem ersten Satz von Zeit- und Frequenzressourcen, wobei das erste Signal Gruppensteuerinformationen (GCI) umfasst, die einer ausgewählten Gruppe von Benutzergeräten (300a, 300b,..., 300n) gemeinsam sind, und Benutzergeräte-Steuerinformationen (UDCI), die für das Benutzergerät (300) spezifisch sind; oder
Empfangen eines ersten Signals in einem ersten Satz von Zeit- und Frequenzressourcen, wobei das erste Signal die Gruppensteuerinformationen (GCI) umfasst, und Empfangen eines zweiten Signals in einem zweiten Satz von Zeit- und Frequenzressourcen, wobei das zweite Signal die Benutzergeräte-Steuerinformationen (UDCI) umfasst, wobei die Gruppensteuerinformationen (GCI) und die Benutzergeräte-Steuerinformationen (UDCI) in einem Satz von Steuerinformationen (CI) enthalten sind, die in einem einzelnen Downlink-Steuerinformationen (DCI)-Format enthalten sind; und einen Prozessor (302), der für Folgendes ausgelegt ist:
Decodieren der Gruppensteuerinformationen (GCI) und der Benutzergeräte-Steuerinformationen (UDCI), und
wobei der Transceiver (304) ferner dazu ausgelegt ist, Daten gemäß den Gruppensteuerinformationen (GCI) und den Benutzergeräte-Steuerinformationen (UDCI) zu empfangen oder zu senden.

6. Netzwerkknoten (100) oder Benutzergerät (300) gemäß einem der vorhergehenden Ansprüche, wobei die Gruppensteuerinformationen (GCI) ein oder mehrere Elemente in der Gruppe angeben, die Folgendes umfassen:
Planungszuordnungsinformationen; Multiple Input Multiple Output (MIMO)-Übertragungsinformationen; Transportformatinformationen; Informationen über die Anzahl der geplanten Benutzergeräte, Mehrfachzugriffsmodusinformationen; und Benutzergeräte-Leistungszuteilungsinformationen.

7. Netzwerkknoten (100) oder Benutzergerät (300) gemäß einem der vorhergehenden Ansprüche, wobei die Gruppensteuerinformationen (GCI) ein oder mehrere Elemente in der Gruppe angeben, die Folgendes umfassen: einen gemeinsamen MIMO-Vorcodierungsmatrixindex oder -Vorcodierungsvektorindex; eine allgemeine Anzahl von Datenströmen oder Schichten, die für die Benutzergeräte (300a, 300b,..., 300n) der ausgewählten Gruppe verfügbar sind; und einen Satz von allgemeinen Zeit- und Frequenzressourcen, die den Benutzergeräten (300a, 300b,..., 300n) der ausgewählten Gruppe zugewiesen sind, oder einen Teilsatz von Zeit- und Frequenzressourcen, die von den Benutzergeräten (300a, 300b,..., 300n) der ausgewählten Gruppe geteilt werden.

8. Netzwerkknoten (100) oder Benutzergerät (300) gemäß Anspruch 7, wobei die Gruppensteuerinformationen (GCI) ferner ein gemeinsames Modulationsformat angeben.

9. Netzwerkknoten (100) oder Benutzergerät (300) gemäß einem der vorhergehenden Ansprüche, wobei die Benutzergeräte-Steuerinformationen (UDCI) ein oder mehrere Elemente in der Gruppe angeben, die Folgendes umfassen:
Benutzergeräte-Identitätsinformationen; Transportformatinformationen; hybride automatische Wiederholungsanforderungs-(HARQ)-Informationen; und Benutzergeräte-Leistungszuteilungsinformationen.

10. Netzwerkknoten (100) oder Benutzergerät (300) gemäß einem der vorhergehenden Ansprüche, wobei die Benutzergeräte-Steuerinformationen (UDCI) eine Kanalcoderate und ein Mehrbenutzer-Verschachtelungsschema angeben.

11. Netzwerkknoten (100) oder Benutzergerät (300) gemäß einem der vorhergehenden Ansprüche, wobei die Benutzergeräte-Steuerinformationen (UDCI) eine Benutzergeräte-Leistungszuteilung, ein Modulationsschema und eine Kanalcoderate oder einen Modulations- und Codierschemaindikator, einen benutzergerätespezifischen MIMO-Vorcodierungsmatrixindex oder -Vorcodierungsvektorindex angeben.

12. Netzwerkknoten (100) oder Benutzergerät (300) gemäß Anspruch 10 oder 11, wobei die Benutzergeräte-Steuerinformationen (UDCI) ferner die Anzahl von benutzergerätespezifischen Datenströmen oder Schichten angeben, die für die Benutzergeräte (300a, 300b,..., 300n) der ausgewählten Gruppe verfügbar sind.

13. Netzwerkknoten (100) oder Benutzergerät (300) gemäß einem der vorhergehenden Ansprüche, wobei die Steuerinformationen (CI) in einem einzelnen Multicast-Downlink-Steuerinformationen (DCI)-Format enthalten sind.

14. Verfahren (200) in einem Netzwerkknoten für ein Drahtloskommunikationssystem (500), das nichtorthogonalen Mehrfachzugriff verwendet, wobei das Verfahren Folgendes umfasst:
Auswählen (202) einer Gruppe von Benutzergeräten (300a, 300b,..., 300n) für überlagerten Empfang oder überlagerte Übertragung von Daten;
Bestimmen (204) der Steuerinformationen (CI) für die Benutzergeräte (300a, 300b,..., 300n) der ausgewählten Gruppe, wobei die Steuerinformationen (CI) Gruppensteuerinformationen (GCI) umfassen, die den Benutzergeräten (300a, 300b,..., 300n) der ausgewählten Gruppe gemeinsam sind, und mindestens eines Satzes von Benutzergeräte-Steuerinformationen (UDCI), die für mindestens ein Benutzergerät (300) der Benutzergeräte (300a, 300b,..., 300n) der ausgewählten Gruppe spezifisch sind, wobei die Steuerinformationen (CI) in einem einzelnen Downlink-Steuerinformationen (DCI)-Format enthalten sind;
Übertragen (206) eines ersten Signals, das an die Benutzergeräte (300a, 300b,..., 300n) der ausgewählten Gruppe in einem ersten Satz von Zeit- und Frequenzressourcen adressiert ist, wobei das erste Signal die Gruppensteuerinformationen (GCI) und die Benutzergeräte-Steuerinformationen (UDCI) umfasst;
oder
Übertragen (208) eines ersten Signals, das an die Benutzergeräte (300a, 300b,..., 300n) der ausgewählten Gruppe in einem ersten Satz von Zeit- und Frequenzressourcen adressiert ist, wobei das erste Signal die Gruppensteuerinformationen (GCI) umfasst, und Übertragen eines zweiten Signals, das an mindestens ein Benutzergerät (300) der Benutzergeräte (300a, 300b,..., 300n) der ausgewählten Gruppe in einem zweiten Satz von Zeit- und Frequenzressourcen adressiert ist, wobei das zweite Signal die Benutzergeräte-Steuerinformationen (UDCI) umfasst.

15. Verfahren (400) in einem Benutzergerät für ein Drahtloskommunikationssystem (500), das nichtorthogonalen Mehrfachzugriff verwendet, wobei das Verfahren Folgendes umfasst:
Empfangen (402) eines ersten Signals in einem ersten Satz von Zeit- und Frequenzressourcen, wobei das erste Signal Gruppensteuerinformationen (GCI) umfasst, die einer ausgewählten Gruppe von Benutzergeräten (300a, 300b,..., 300n) gemeinsam sind, und Benutzergeräte-Steuerinformationen (UDCI), die für das Benutzergerät (300) spezifisch sind; oder
Empfangen (404) eines ersten Signals in einem ersten Satz von Zeit- und Frequenzressourcen, wobei das erste Signal die Gruppensteuerinformationen (GCI) umfasst, und Empfangen eines zweiten Signals in einem zweiten Satz von Zeit- und Frequenzressourcen, wobei das zweite Signal die Benutzergeräte-Steuerinformationen (UDCI) umfasst, wobei die Gruppensteuerinformationen (GCI) und die Benutzergeräte-Steuerinformationen (UDCI) in einem Satz von Steuerinformationen (CI) enthalten sind, die in einem einzelnen Downlink-Steuerinformationen (DCI)-Format enthalten sind; und
Decodieren (406) der Gruppensteuerinformationen (GCI) und der Benutzergeräte-Steuerinformationen (UDCI);
Empfangen oder Übertragen (408) von Daten gemäß den Gruppensteuerinformationen (GCI) und den Benutzergeräte-Steuerinformationen (UDCI).

16. Computerprogramm mit einem Programmcode, der Anweisungen enthält, die, wenn sie von einem Computer ausgeführt werden, den Computer veranlassen, ein Verfahren gemäß Anspruch 14 oder Anspruch 15 auszuführen.

## Revendications

1. Noeud de réseau destiné à un système de communication sans fil (500) utilisant un accès multiple non orthogonal, le noeud de réseau (100) comprenant :
un processeur (102) configuré pour
sélectionner un groupe de dispositifs d'utilisateur (300a, 300b, ..., 300n) pour la réception superposée ou l'émission superposée de données,
déterminer des informations de commande, CI, pour les dispositifs d'utilisateur (300a, 300b, ..., 300n) du groupe sélectionné, les informations de commande, CI, contenant des informations de commande de groupe, GCI, communes aux dispositifs d'utilisateur (300a, 300b, ..., 300n) du groupe sélectionné et au moins des informations de commande de dispositif d'utilisateur, UDCI, spécifiques à au moins un dispositif d'utilisateur (300) des dispositifs d'utilisateur (300a, 300b, ..., 300n) du groupe sélectionné, lesdites informations de commande, CI, étant contenues dans un format d'informations de commande de liaison descendante, DCI, unique ; et
un émetteur/récepteur (104) configuré pour
émettre un premier signal qui est adressé aux dispositifs d'utilisateur (300a, 300b, ..., 300n) du groupe sélectionné dans un premier ensemble de ressources de temps et de fréquence, le premier signal contenant les informations de commande de groupe, GCI, et les informations de commande de dispositif d'utilisateur, UDCI ; ou
émettre un premier signal qui est adressé aux dispositifs d'utilisateur (300a, 300b, ..., 300n) du groupe sélectionné dans un premier ensemble de ressources de temps et de fréquence, le premier signal contenant les informations de commande de groupe, GCI, et émettre un deuxième signal qui est adressé à au moins un dispositif d'utilisateur (300) des dispositifs d'utilisateur (300a, 300b, ..., 300n) du groupe sélectionné dans un deuxième ensemble de ressources de temps et de fréquence, le deuxième signal contenant les informations de commande de dispositif d'utilisateur, UDCI.

2. Noeud de réseau (100) selon la revendication 1, dans lequel les dispositifs d'utilisateur (300a, 300b, ..., 300n) du groupe sélectionné partagent au moins une ressource de temps et de fréquence commune pour la réception ou l'émission superposée de données.

3. Noeud de réseau (100) selon la revendication 1 ou 2, dans lequel le premier signal est émis dans au moins un canal de commande.

4. Noeud de réseau (100) selon l'une quelconque des revendications précédentes, dans lequel les informations de commande, CI, contiennent des informations de commande de dispositif d'utilisateur, UDCI, pour chaque dispositif d'utilisateur du groupe sélectionné.

5. Dispositif d'utilisateur destiné à un système de communication sans fil (500) utilisant un accès multiple non orthogonal, le dispositif d'utilisateur (300) comprenant :
un émetteur/récepteur (104) configuré pour
recevoir un premier signal dans un premier ensemble de ressources de temps et de fréquence, le premier signal contenant des informations de commande de groupe, GCI, communes à un groupe sélectionné de dispositifs d'utilisateur (300a, 300b, ..., 300n) et des informations de commande de dispositif d'utilisateur, UDCI, spécifiques au dispositif d'utilisateur (300) ; ou
recevoir un premier signal dans un premier ensemble de ressources de temps et de fréquence, le premier signal contenant les informations de commande de groupe, GCI, et recevoir un deuxième signal dans un deuxième ensemble de ressources de temps et de fréquence, le deuxième signal contenant les informations de commande de dispositif d'utilisateur, UDCI, les informations de commande de groupe, GCI, et les informations de commande de dispositif d'utilisateur, UDCI, étant contenues dans des informations de commande, CI, contenues dans un format d'informations de commande de liaison descendante, DCI, unique ; et
un processeur (302) configuré pour
décoder les informations de commande de groupe, GCI, et les informations de commande de dispositif d'utilisateur, UDCI, et
l'émetteur/récepteur (304) étant également configuré pour recevoir ou émettre des données en fonction des informations de commande de groupe, GCI, et des informations de commande de dispositif d'utilisateur, UDCI.

6. Noeud de réseau (100) ou dispositif d'utilisateur (300) selon l'une quelconque des revendications précédentes, dans lequel les informations de commande de groupe, GCI, indiquent un ou plusieurs éléments du groupe contenant : des informations d'affectation d'ordonnancement ; des informations d'émission à entrées multiples et sorties multiples, MIMO ; des informations de format de transport ; des informations de nombre de dispositifs d'utilisateur ordonnancés, des informations de mode d'accès multiple ; et des informations d'attribution de puissance de dispositif d'utilisateur.

7. Noeud de réseau (100) ou dispositif d'utilisateur (300) selon l'une quelconque des revendications précédentes, dans lequel les informations de commande de groupe, GCI, indiquent un ou plusieurs éléments du groupe contenant : un index de matrice de précodage MIMO commun ou un index de vecteur de précodage ; un nombre commun de flux de données ou de couches disponibles aux dispositifs d'utilisateur (300a, 300b, ..., 300n) du groupe sélectionné ; et un ensemble de ressources de temps et de fréquence communes affectées aux dispositifs d'utilisateur (300a, 300b, ..., 300n) du groupe sélectionné ou un sous-ensemble de ressources de temps et de fréquence partagées par les dispositifs d'utilisateur (300a, 300b, ..., 300n) du groupe sélectionné.

8. Noeud de réseau (100) ou dispositif d'utilisateur (300) selon la revendication 7, dans lequel les informations de commande de groupe, GCI, indiquent également un format de modulation commun.

9. Noeud de réseau (100) ou dispositif d'utilisateur (300) selon l'une quelconque des revendications précédentes, dans lequel les informations de commande de dispositif d'utilisateur, UDCI, indiquent un ou plusieurs éléments du groupe contenant : des informations d'identité de dispositif d'utilisateur ; des informations de format de transport ; des informations de demande de répétition automatique hybride, HARQ ; et des informations d'attribution de puissance de dispositif d'utilisateur.

10. Noeud de réseau (100) ou dispositif d'utilisateur (300) selon l'une quelconque des revendications précédentes, dans lequel les informations de commande de dispositif d'utilisateur, UDCI, indiquent une vitesse de code de canal ; et un schéma d'entrelacement multi-utilisateur.

11. Noeud de réseau (100) ou dispositif d'utilisateur (300) selon l'une quelconque des revendications précédentes, dans lequel les informations de commande de dispositif d'utilisateur, UDCI, indiquent une attribution de puissance de dispositif d'utilisateur ; un schéma de modulation et une vitesse de code de canal ou un indicateur de schéma de codage er de modulation ; un index de matrice de précodage MIMO spécifique à un dispositif d'utilisateur ou un index de vecteur de précodage.

12. Noeud de réseau (100) ou dispositif d'utilisateur (300) selon la revendication 10 ou 11, dans lequel les informations de commande de dispositif d'utilisateur, UDCI, indiquent également le nombre de flux de données ou de couches spécifiques à un dispositif d'utilisateur, disponibles aux dispositifs d'utilisateur (300a, 300b, ..., 300n) du groupe sélectionné.

13. Noeud de réseau (100) ou dispositif d'utilisateur (300) selon l'une quelconque des revendications précédentes, dans lequel les informations de commande, CI, sont contenues dans un format d'informations de commande de liaison descendante, DCI, de multidiffusion unique.

14. Procédé (200) exécuté dans un noeud de réseau destiné à un système de communication sans fil (500) utilisant un accès multiple non orthogonal, le procédé comprenant les étapes consistant à :
sélectionner (202) un groupe de dispositifs d'utilisateur (300a, 300b, ..., 300n) pour la réception superposée ou l'émission superposée de données ;
déterminer (204) des informations de commande, CI, pour les dispositifs d'utilisateur (300a, 300b, ..., 300n) du groupe sélectionné, les informations de commande, CI, contenant des informations de commande de groupe, GCI, communes aux dispositifs d'utilisateur (300a, 300b, ..., 300n) du groupe sélectionné et au moins des informations de commande de dispositif d'utilisateur, UDCI, spécifiques à au moins un dispositif d'utilisateur (300) des dispositifs d'utilisateur (300a, 300b, ..., 300n) du groupe sélectionné, lesdites informations de commande, CI, étant contenues dans un format d'informations de commande de liaison descendante, DCI, unique ;
émettre (206) un premier signal qui est adressé aux dispositifs d'utilisateur (300a, 300b, ..., 300n) du groupe sélectionné dans un premier ensemble de ressources de temps et de fréquence, le premier signal contenant les informations de commande de groupe, GCI, et les informations de commande de dispositif d'utilisateur, UDCI ; ou
émettre (208) un premier signal qui est adressé aux dispositifs d'utilisateur (300a, 300b, ..., 300n) du groupe sélectionné dans un premier ensemble de ressources de temps et de fréquence, le premier signal contenant les informations de commande de groupe, GCI, et émettre un deuxième signal qui est adressé à au moins un dispositif d'utilisateur (300) des dispositifs d'utilisateur (300a, 300b, ..., 300n) du groupe sélectionné dans un deuxième ensemble de ressources de temps et de fréquence, le deuxième signal contenant les informations de commande de dispositif d'utilisateur, UDCI.

15. Procédé (400) exécuté dans un dispositif d'utilisateur destiné à un système de communication sans fil (500) utilisant un accès multiple non orthogonal, le procédé comprenant les étapes consistant à :
recevoir (402) un premier signal dans un premier ensemble de ressources de temps et de fréquence, le premier signal contenant des informations de commande de groupe, GCI, communes à un groupe sélectionné de dispositifs d'utilisateur (300a, 300b, ..., 300n) et des informations de commande de dispositif d'utilisateur, UDCI, spécifiques au dispositif d'utilisateur (300) ; ou
recevoir (404) un premier signal dans un premier ensemble de ressources de temps et de fréquence, le premier signal contenant les informations de commande de groupe, GCI,
et recevoir un deuxième signal dans un deuxième ensemble de ressources de temps et de fréquence, le deuxième signal contenant les informations de commande de dispositif d'utilisateur, UDCI, les informations de commande de groupe, GCI, et les informations de commande de dispositif d'utilisateur, UDCI, étant contenues dans des informations de commande, CI, contenues dans un format d'informations de commande de liaison descendante, DCI, unique ; et
décoder (406) les informations de commande de groupe, GCI, et les informations de commande de dispositif d'utilisateur, UDCI ;
recevoir ou émettre (408) des données en fonction des informations de commande de groupe, GCI, et des informations de commande de dispositif d'utilisateur, UDCI.

16. Programme informatique comprenant un code de programme contenant des instructions qui, lorsqu'elles sont exécutées par un ordinateur, font que l'ordinateur exécute un procédé selon la revendication 14 ou la revendication 15.
